# EUROPÄISCHE PATENTSCHRIFT

(11) **EP 1 815 073 B1**
(45) Veröffentlichungstag und Bekanntmachung des Hinweises auf die Patenterteilung: **12.01.2011**
(21) Anmeldenummer: 05819139.6
(22) Anmeldetag: 15.11.2005
(51) Int. Cl.: E03F 3/04, F28D 7/00, F28D 21/00

(54) **ABSORBER FÜR EIN ROHR- ODER KANALBAUWERK SOWIE ROHR- ODER KANALBAUWERK MIT EINEM SOLCHEN ABSORBER**
ABSORBER FOR A PIPE CONSTRUCTION OR CHANNEL CONSTRUCTION AND PIPE CONSTRUCTION OR CHANNEL CONSTRUCTION PROVIDED WITH THIS ABSORBER
ABSORBEUR POUR STRUCTURE DE TUYAUX OU DE CANAUX ET STRUCTURE DE TUYAUX OU DE CANAUX MUNI D'UN TEL ABSORBEUR

(30) Priorität: 22.11.2004 DE 202004018084 U
(43) Veröffentlichungstag der Anmeldung: 08.08.2007
(73) Patentinhaber: Schulte, Joachim, 58515 Lüdenscheid (DE)
(72) Erfinder: Schulte, Joachim, 58515 Lüdenscheid (DE)
(74) Vertreter: Schröter & Albrecht
(86) Internationale Anmeldenummer: PCT/EP2005/055986
(87) Internationale Veröffentlichungsnummer: WO 2006/056544

(56) Entgegenhaltungen:
- EP-A- 1 215 460
- DE-A1- 3 607 207
- DE-A1- 19 719 311
- PATENT ABSTRACTS OF JAPAN Bd. 2003, Nr. 04, 2. April 2003 (2003-04-02) & JP 2002 348942 A (KUBOTA CORP), 4. Dezember 2002 (2002-12-04)

## Beschreibung

Die Erfindung betrifft einen Absorber für ein Rohr- oder Kanalbauwerk mit wenigstens einem Vorlaufanschluss und wenigstens einem Rücklaufenschluss und einem oder mehreren, einen Vorlauf mit einem Rücklauf verbindenden Absorberkanälen, Ferner betrifft die Erfindung ein Rohr- oder Kanalbauwerk mit einem solchen Absorber.

Es sind unterschiedliche Wärmetauscherinstallationen bekannt geworden, mit denen Im Abwasser enthaltene Wärme gewonnen werden kann, beispielsweise um die aus dem Abwasser zurückgewonnene Wärme in ein Femheizungsnetz einzuspeisen. DE 20 2004 005 768 U1 beschreibt ein Bauteil zur Leitung von Wasser mit einer Aussparung im Bereich seiner Sohle. Die Aussparung erstreckt sich über die gesamte Länge des Bauteils und dient zur Aufnahme von mehreren nebeneinander angeordneten Vierkantmotallrohren zum Ausbilden einer Wärmetauschereinrichtung (Absorber). Angeordnet sind diese Metallrohre in der Aussparung in einem Vergussmörtel, der nach Einlegen der Rohre in die verbliebenen Spalten, insbesondere zwischen den einzelnen Rohren gegossen wird. Durch die mittels des Vergussrnörtels in der Aussparung gehaltenen Metallrohre ist die Aussparung selbst wieder beseitigt, so dass das Bauteil, insbesondere wenn dieses als Rohr ausgebildet ist, durch den Absorber nicht hinsichtlich seiner Querschnittsfläche reduziert ist. Die in die Aussparung eingelegten Rohre werden an ihren Enden durch Verbindungsstücke dergestalt miteinander verbunden, dass von einem Vorlauf herangeführte, für den Wärmetransport benutzte Flüssigkeit durch die Rohre geleitet und durch einen Rücklauf abgeführt wird. Der Vor- und der Rücklauf befinden sich zweckmäßigerweise in einem Kanalschacht. Das aus diesem Dokument bekannte Bauteil dient zur Gewinnung von Wärme aus dem durch das Bauteil geleitete Abwasser. Die über den Verlauf in die im Bereich der Sohle des Bauteils zugeführte kühlere Flüssigkeit wird beim Durchfließen der Wärmetauschereinrichtung durch das wärmere, über den Absorber geleitete Abwasser erwärmt. Die gewonnene Wärme wird über eine an den Rücklauf angeschlossene Wärmepumpe ihrer weiteren Verwendung zugeführt.

Letztlich handelt es sich bei dem in diesem Dokument beschriebenen Bauteil mit seinem Absorber um eine solches, bei dem die Wärmetauschereinrichtung im Gegensatz zu dem in DE 35 21 585 A1 beschriebenen Kanalrohr nachträglich und nicht bei der Herstellung des Kanalrohres in die Rohrwandung integriert wird.

Um einen möglichst guten Wärmeübergang von dem Abwasser In die Rohre der Wärmetauschereinrichtung zu erhalten, werden bei dieser vorbekannten Wärmetauschereinrichtung Metallrohre eingesetzt. Zwar weisen diese Rohre eine gute Wärmeleitfähigkeit auf, nachteilig ist bei diesen Rohren jedoch, dass zur Ausbildung von längeren Wärrnetauschereinrichtungen die einzelnen Rohre stirnseitig miteinander verschweißt werden müssen. Überdies eignen sich derartige Rohre nicht für einen Einsatz in bereits bestehenden Kanalbauwerken, insbesondere in solchen, die keine Aussparung im Bereich ihrer Sohle aufweisen. Vorhandene Kanalbauwerke weisen vielfach Beschädigungen, Kanten oder Sprünge auf, die einen Einbau einer solchen Wärmetauschereinrichtung behindern und ein solcher Einbau nur mit einem erheblichen Mehraufwand realisierbar ist.

Aus DE 197 19 311 C2 ist eine weitere Wärmetauschereinrichtung zum Einbau in ein Kanalrohr beschrieben. Durch den Einbau dieser vorbekannten Wärmetauschereinrichtung mit ihrem Absorber in ein bestehendes Kanalrohr wird die freie Querschnittsfläche im Bereich der Sohle des Rohres nicht unerheblich reduziert. Des Weiteren bildet eine solche die Sohle nicht unbeträchtlich erhöhende Einbaueinheit eine Stufe innerhalb des Kanals aus, was wiederum unerwünscht ist. Auch bei dieser vorbekannten Wärmetauschereinrichtung stellen sich letztendlich dieselben Nachteile dar, wie diese zu DE 20 2004 005 768 U1 beschrieben sind.

Weitere Wärmetauschereinrichtungen zum Einbau in ein Kanalrohr sind in JP-A-2002 348942 offenbart. und in DE-A-36 07 207, welche den Oberbegriff des Anspruchs 1 offenbart.

Ausgehend von dem vordiskutierten Stand der Technik liegt der Erfindung die Aufgabe zugrunde, einen Absorber für eine Wärmegewinnung aus wasserführenden Kanälen oder Rohren, beispielsweise Abwasserkanälen vorzuschlagen, die die zum vorbekannten Stand der Technik aufgezeigten Nachteile vermeidet. Des Weiteren liegt der Erfindung die Aufgabe zugrunde, ein zur Wärmegewinnung geeignetes Rohr- oder Kanalbauwerk vorzuschlagen.

Diese Aufgabe wird erfindungsgemäß durch einen eingangs genannten gattungsgemäßen Absorber gelöst, bei dem die Absorberkanäle des Absorbers in einer Absorberkanalmatte zusammengefasst eine gegenständliche Einheit bilden und die Absorberkanalmatte aus einem Material mit zumindest während seiner Verlegung im Rohr- oder im Kanalbauwerk flexiblen Eigenschaften besteht, wobei ein in das Rohr- oder Kanalbauwerk einziehbarer Inliner vorgesehen ist, der aus einem aushärtenden Material besteht und der die Absorberkanalmatte im Bereich der Sohle des Rohr- oder Kanalbauwerks nach dem Aushärten fixiert. Ein erfindungsgemäßes Rohr- oder Kanalbauwerk weist einen solchen Absorber auf, wobei der Absorber in der Sohle des Bauwerks angeordnet ist und in dieser Lage durch einen in das Bauwerk eingezogenen, das Bauwerk innenseitig auskleidenden Schlauch gehalten ist.

Bei dem Absorber sind die einzelnen Absorberkanäle zu einer gegenständlichen Einheit zusammengefasst. Diese gegenständliche Einheit ist als flexible Absorberkanalmatte ausgelegt, wobei die flexiblen Eigenschaften der Absorberkanalmatte zunächst grundsätzlich nur während seiner Verlegung in einem Rohr- oder Kanalbauwerk gegeben sein müssen. Für einen Betrieb des Absorbers werden dagegen die flexiblen Eigenschaften der Absorberkanalmatte grundsätzlich nicht benötigt. Daher kann die Absorberkanalmatte ihre flexiblen Eigenschaften auch nach einem Einbau in ein Rohr- oder Kanalbauwerk beibehalten. Gleichwohl ist es möglich, dass sich nach seiner Verlegung die flexiblen Materialeigenschaften der Absorberkanalmatte verlieren, beispielsweise durch einen Aushärteprozess oder dergleichen. Die flexiblen Eigenschaften einer solchen Absorberkanalmatte, in der die einzelnen Absorberkanäle zu einer gegenständlichen Einheit zusammengefasst sind, ermöglichen eine leichte Montage der Absorberkanalmatte. Diese kann beispielsweise in ein bestehendes Rohr- oder Kanalbauwerk eingezogen werden, was insbesondere einen Einbau auch in Rohren oder Kanälen kleineren Durchmessers möglich macht. Infolge der flexiblen Eigenschaften der Absorberkanalmatte können Kantensprünge oder dergleichen innerhalb eines bestehenden Rohr- oder Kanalbauwerkes ohne weiteres überbrückt werden. Die Absorberkanalmatte legt sich aufgrund dieser Materialeigenschaften flächig auf der Oberseite der Sohle des Rohr- oder Kanalbauwerkes auf. Die Absorberkanalmatte liegt nach ihrem Einziehen/Verlegen innerhalb eines solchen Bauwerkes satt mit seiner Unterseite auf der Sohle des Bauwerkes auf, insbesondere ohne dass hierfür grundsätzlich zusätzliche Maßnahmen getroffen werden müssen. Ein sattes Aufliegen der Absorberkanalmatte hat zum Vorteil, dass sich dann ein Wärmeübergang von dem Bauwerk im Bereich seiner Sohle in die Absorberkanalmatte und insbesondere in die in den Absorberkanälen transportierte WärmetauscherFlüssigkeit einstellt. Ein solcher Wärmeübergang ist wünschenswert, da über den Absorber somit auch Wärme aus dem oberflächennahen Erdreich gewonnen werden kann. Zum besseren Ausgleich von Unebenheiten im Bereich der Sohle eines Rohr- oder Kanalbauwerks ist gemäß einer Ausgestaltung der Erfindung vorgesehen, dass die Unterseite der Absorberkanalmatte nicht nur flexible, sondern auch nachgiebige Eigenschaften aufweist. Unebenheiten, Steinchen oder dergleichen drücken sich sodann in die Unterseite der Absorbermatte und vermeiden auf diese Weise eine Ausbildung größerer Bereiche, in denen die Absorberkanalmatte mit ihrer Unterseite nicht auf der Sohle des Bauwerks aufliegt.

Bei einer solchen Absorbermatte weist der zumindest eine Absorberkanal zweckmäßigerweise einen mäandrierenden Verlauf zwischen seinem Vorlauf und seinem Rücklauf auf. Gebildet werden kann eine solche Absorbermatte entweder einstückig oder aus einem Zusammensetzen von mehreren Einzelstücken. Im letzteren Fall kann beispielsweise ein Mittelstück vorgesehen sein, in dem einzelne Absorberkanalabschnitte parallel zueinander verlaufend angeordnet sind. Das Mittelstück einer solchen Absorberkanalmatte kann endlos gefertigt werden und somit vor Ort beim Einziehen in ein Rohr oder einen Kanal von einer Rolle abgerollt werden. Dieses ermöglicht nicht nur die Ausbildung von Absorbern variabler Länge, sondern mit einem solchen Mittelstück lassen sich insbesondere auch lange Absorberstrecken ausbilden. Zum Verbinden der einzelnen Absorberkanalabschnitte eines solchen Mittelstückes dienen zwei Endstücke, die zweckmäßigerweise aus demselben Material bestehen, wie das Mittelstück der Absorberkanalmatte. Die Endstücke sind konzipiert, um benachbart zueinander und der Längserstreckung eines solchen Mittelstücks verlaufende Absorberkanalabschnitte miteinander zu verbinden, um einen einzigen oder auch mehrere parallele Absorberkanäle mit einem mäandrierenden Verlauf bereitzustellen. Das eine Endstück einer solchen Absorbermatte verfügt des Weiteren über einen oder mehrere Vorlaufanschlüsse sowie über einen oder mehrere Rücklaufanschlüsse. Die Zahl der Vorlauf- und Rücklaufanschlüsse richtet sich nach der Anzahl der unabhängig voneinander zu betreibenden Absorberkanäle. Ohne weiteres können zum Auskleiden eines Rohres oder Kanals auch mehrere Absorberkanalmatten nebeneinander verlaufend angeordnet werden. Bei Vorsehen von mehreren, parallel zueinander verlaufenden Kanälen in einer solchen Absorbermatte können diese gemäß einer anderen Betriebsart sämtlich auch in dieselbe Richtung weisend durchströmt werden, so dass dann an dem einen Ende einer solchen Absorberkanalmatte ein Vorlaufanschluss und an dem anderen Ende ein Rücklaufanschluss angeordnet sind. Eine solche Anordnung der Vor- und Rückläufanschlüsse wird man insbesondere dann einsetzen, wenn die Absorberkanalmatte lediglich einen einzigen Kanal aufweist.

Eine solche Absorberkanalmatte weist nur eine relativ geringe Höhe auf. Gleichwohl ist es zweckmäßig, wenn an seinen Längs- und Querkanten eine solche Absorberkanalmatte nach außen hin verjüngende Lippen als Übergangsstücke zum Anschließen der in das Innere des Rohres und Kanals weisenden Oberfläche an die Rohr- bzw. Kanalwandung aufweist.

Gemäß einer weiteren Ausgestaltung ist vorgesehen, dass die Absorberkanaimatte eine ebene Unterseite und ein in Querrichtung zur Fließrichtung des Abwasser verlaufende Wellung aufweist. In den Erhöhungen der Wellung bildet sich der Absorberkanal bzw. seine Absorberkanalabschnitte ab. Diese Maßnahme dient dem Zweck einer Erhöhung der in das innere des Rohr- oder Kanalbauwerks weisenden Oberfläche der einzelnen Absorberkanalabschnitte.

Der Absorber kann aus verschiedenen Materialien hergestellt sein, solange die vorbeschriebenen Eigenschaften gegeben sind. Beispielsweise eignen sich verschiedene Kunststoffe oder auch Gummimischungen zum Ausbilden der Absorberkanalmatte. Sollte eine solche Absorberkanalmatte aus mehreren Stücken zusammengesetzt sein, können die einzelnen Elemente durch Kleben, Schweißen, Vulkanisieren oder durch eine Steckverbindung miteinander verbunden sein.

Der vorbeschriebene Absorber bzw. seine Absorberkanalmatte eignet sich vor allem zum Ausrüsten von bereits bestehenden Rohr- und Kanalbauwerken, insbesondere dann, wenn diese ohnehin sanierungsbedürftig sind und durch Einziehen eines aushärtenden Schlauches (Inliners) saniert werden. Bei einer solchen Sanierung kann ohne weiteres der Absorber bzw. seine Absorberkanalmatte mit dem Einziehen eines solchen Inliners zum Verkleiden der Innenwand des Bauwerks mit eingezogen werden. Der der Rohr- bzw. Kanalsanierung dienende Inliner härtet nach dem Einziehen aus und sorgt somit dafür, dass der Absorber an seiner bestimmungsgemäßen Position im Bereich der Sohle des Bauwerks fixiert ist. Überdies wird durch den Inliner die Absorberkanalmatte quasi zwischen der Außenseite des Inliners und der Innenseite des Bauwerkes eingeklemmt, so dass auch durch diese Maßnahme ein sattes Anliegen der Unterseite der Absorberkanalmatte an der Oberseite der Sohle gewährleistet ist. Aufgrund der flexiblen Eigenschaften des Inliners legt sich dieser ohne weiteres an der Oberseite der Absorberkanalmatte vollflächig an, auch wenn die Absorberkanalmatte zur Innenseite des Rohr- oder Kanalbauwerks in der vorbeschriebenen Art und Weise gewellt ist. Diese Strukturierung der Absorberkanalmatte paust sich sodann durch den Sanierungsschlauch hindurch, so dass die gewünschte Vergrößerung der Absorberkanaloberfläche erhalten bleibt.

Die beschriebene Absorberkanalmatte ist gemäß einem weiteren Ausführungsbeispiel Teil eines solchen für die Sanierung eines Rohr- oder Kanalbauwerks vorgesehenen Inliners und beispielsweise bei seiner Herstellung in diesen eingewebt oder auch anschließend auf den Inliner aufkaschiert. Dieses hat den Vorteil, dass bei der Sanierung des Rohr- oder Kanalbauwerks mit dem Einziehen des Inliners gleichfalls die Absorberkanalmatte in das Bauwerk eingebracht wird. ist die Absorberkanalmatte Teil eines solchen für die Sanierung des Rohr- oder Kanalbauwerks dienenden Kunststoffinliners, können die die Absorberkanäle bildenden Wände, zumindest hinsichtlich der die Kanäle offenhaltenden Eigenschaften von dem Inliner selbst übernommen werden. Es ist dann sicherzustellen, dass nach Einziehen des Inliners vor seiner Aushärtung die Absorberkanäle, beispielsweise durch Druckluft oder Flüssigkeitsbeaufschlagung bis zum Aushärten des Schlauches offengehalten werden.

Für den Fall, dass unterhalb eines solchen Sanierungsschlauches (Inliners) eine Schutzfolie (Preliner) eingezogen wird, kann die Absorberkanatmatte ebenso Teil dieses Schutzfolieninliners sein und mit dieser in das Rohr- oder Kanalbauwerk eingezogen werden.

Für den Fall, dass in das Rohr- oder Kanalbauwerk nicht nur die Absorberkanalmatte, sondern auch ein für die Sanierung des Bauwerks dienender Inliner, gegebenenfalls mit einem Preliner eingebracht werden sollen, wird man die Absorberkanalmatte in Abhängigkeit von der jeweilig bevorzugten Wärmegewinnung anordnen. Steht eine Wärmegewinnung aus dem umgebenden Erdreich im Vordergrund, wird man die Absorberkanalmatte unter die den oder die Liner und somit zweckmäßigerweise unmittelbar an die Innenseite des zu sanierenden Rohr- oder Kanalbauwerks angrenzend anordnen. Steht dagegen eine Wärmegewinnung aus dem Abwasser im Vordergrund, wird man überlegen, die Absorberkanalmatte möglichst nah in den Bereich des Abwassers zu bringen. Unabhängig von den beiden vorbeschriebenen beispielhaften Anordnungsmöglichkeiten versteht es sich, dass ein Wärmeübergang in jedem Fall sowohl von der einen als auch von der anderen Seite her in das in den Absorberkanälen geführte Wärmetauscherfluid erfolgt.

Gemäß einer weiteren Ausgestaltung der Erfindung wird vorgeschlagen, dass zumindest zwei Absorberkanalmatten übereinander liegend angeordnet sind, beispielsweise auch in einer Art und Weise, dass deren Absorberkanäle versetzt zueinander angeordnet sind. Bei einer solchen Ausgestaltung kann beispielsweise vorgesehen sein, dass zwischen den beiden Absorberkanalmatten ein für eine Sanierung vorgesehener Inliner angeordnet ist.

Selbst wenn durch die Wahl des zur Ausbildung der Absorberkanalmatte eingesetzten Materials und zusätzlich gegebenenfalls durch einen Sanierungsschlauch ein Wärmeübergang von dem Abwasser in das in den Absorberkanälen geführte Wärmetauschmittel, beispielsweise Wasser unter Umständen schlechtere Werte aufweist als bei einem Einsatz von Metallrohren, so überwiegen dennoch die sich aus diesem Absorber ergebenden Vorteile. Ohne weiteres kann einem solchen Nachteil dadurch begegnet werden, dass die Länge des Absorbers entsprechend länger ausgelegt ist, was wiederum wie vorbeschrieben ohne weiteres möglich ist.

Die vorstehende Beschreibung des Absorbers erfolgte anhand eines Beispiels, bei dem über den Absorber Wärme aus dem Erdreich und/oder der in dem Rohr- oder Kanalbauwerk strömenden Flüssigkeit gewonnen wird. Ohne weiteres kann der Absorber auch umgekehrt betrieben werden, so dass über diesen Wärme in das Erdreich und/oder an die in dem Bauwerk strömenden Flüssigkeit abgegeben wird. Im Rahmen einer solchen Ausgestaltung kann der Absorber Teil einer Klimatisierungseinrichtung, etwa für ein Gebäude sein. Der Absorber kann ebenfalls wechselweise in dem einen oder in dem anderen vorbeschriebenen Betriebsmodus betrieben werden.

Nachfolgend ist die Erfindung anhand von Ausführungsbeispielen unter Bezugnahme auf die beigefügten Figuren beschrieben. Es zeigen:
- **Fig. 1:**: einen schematisierten Querschnitt durch ein im Erdreich verlaufendes Abwasserkanalrohr mit einem Absorber gemäß einer ersten Ausgestaltung im Bereich seiner Sohle,
- **Fig. 2:**: eine schematisierte Draufsicht auf den Absorber der Figur 1,
- **Fig. 3:**: eine weitere Absorberkanalmatte in einem Querschnitt und
- **Fig. 4:**: einen Absorber für ein Rohr- oder Kanalbauwerk gemäß ei- ner weiteren Ausgestaltung.

Ein Abwasserkanalrohr 1 ist im Erdreich 2 verlegt. Das Abwasserkanalrohr 1 verfügt über einen Absorber 3, der im Bereich der Sohle des Abwasserkanalrohrs 1 angeordnet ist. Der Absorber 3 verfügt über mehrere in einer Absorberkanalmatte 4 zusammengefasste Absorberkanalabschnitte 5. Die längsseitigen Enden zweier benachbarter Absorberkanalabschnitte 5 sind jeweils wechselweise miteinander verbunden, so dass in jedem benachbarten Absorberkanalabschnitt 5 die darin über einen Vorlauf eingebrachte Flüssigkeit in entgegengesetzter Richtung fließt. Die Absorberkanalmatte 4 weist an ihren Längs- und Querseiten jeweils Übergangslippen 6 auf, um einen allmählichen Übergang von der inneren Oberfläche des Abwasserkanalrohres 1 zur Oberseite der Absorberkanalmatte 4 auszubilden, womit eine Ausbildung von Stufen vermieden wird. Der Absorber 3, insbesondere seine Absorberkanatmatte 4 bestehen aus einem flexiblen Material, beispielsweise einer Gummimischung oder dergleichen.

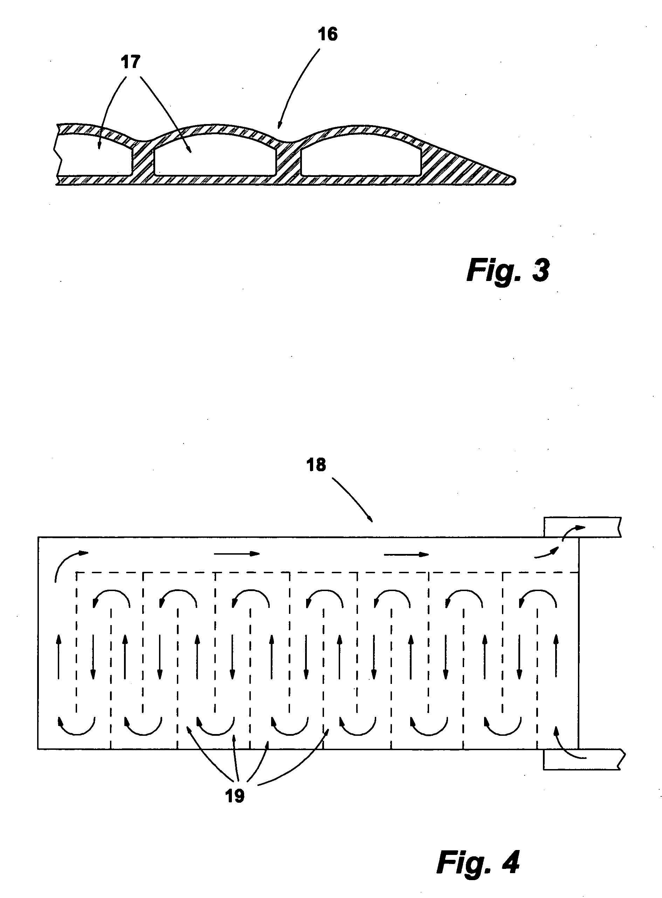

Der Absorber 2 ist in Figur 3 in einer schematisierten Draufsicht bzw. Einsicht wiedergegeben. Die Strömungsrichtung des Wärmetauschermediums, beispielsweise Wasser ist darin mit Pfeilen gekennzeichnet. Der Absorber 3 verfügt über einen Vorlauf 7, der über einen Vorlaufanschluss 8 eines Endstückes 9 angeschlossen ist. Das Endstück 9 verbindet benachbarte Absorberkanalabschnitte 5 miteinander. An das Endstück 9 ist ferner an seinem Rücklaufanschluss 10 ein Rücklauf 11 angeschlossen. Der Vorlauf 7 und der Rücklauf 11 sind in nicht näher dargestellter Art und Weise aus einem das Abwasserkanalrohr 1 mit der Oberfläche verbindenden Schacht aus dem Erdreich 2 herausgeführt und an eine Wärmepumpe angeschlossen. Die Absorberkanalmatte 4 weist an ihrem dem Endstück 9 gegenüberliegenden Ende ein weiteres Endstück 12 auf, durch welches wiederum benachbarte Absorberkanalabschnitte 5 miteinander verbunden werden können, damit die Absorberkanalmatte 4, bestehend bei dem dargestellten Ausführungsbeispiel aus den beiden Endstükken 9, 12 und einem die Absorberkanalabschnitte 5 bildenden Mittelstück 13 ein einziger Absorberkanal gebildet ist, der sich zwischen dem Zulauf 7 und dem Rücklauf 11 erstreckt.

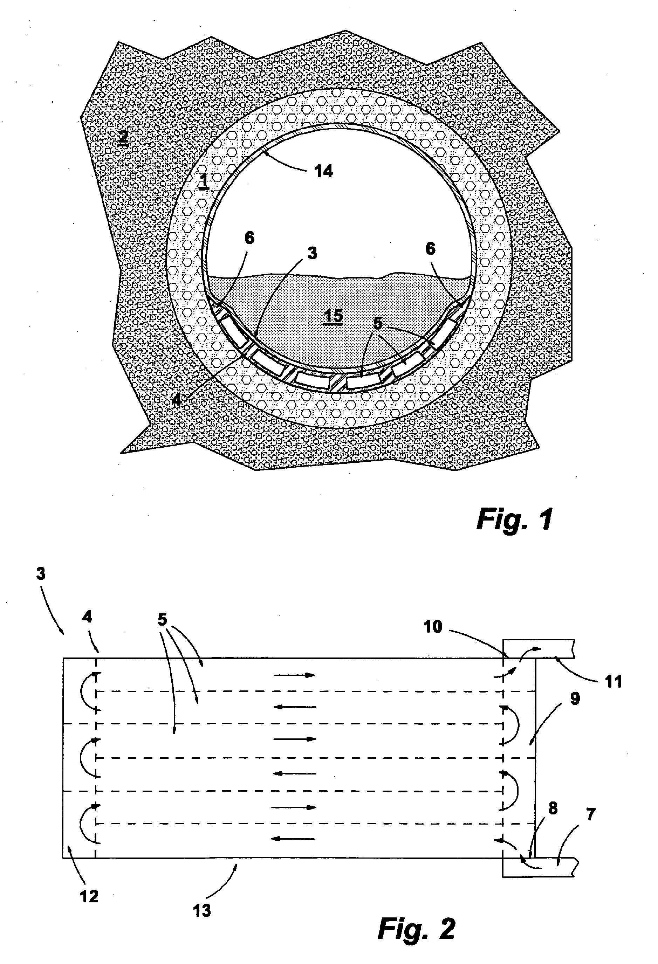

Der Absorber 3 bzw. seine Absorbermatte 4 ist bei dem in Figur 1 dargestellten Ausführungsbeispiel in das Abwasserkanalrohr 1, das Teil eines bestehenden Abwasserkanalsystems ist, eingezogen worden. Zum Fixieren der Absorberkanalmatte 4 in Bereich der Sohle des Abwasserkanalrohrs 1 dient ein die Innenseite des Abwasserkanalrohrs 1 auskleidender Inliner 14, der nach seinem Einziehen in das Abwasserkanalrohr 1 ausgehärtet ist. Techniken zum Einziehen und Erhärten eines solchen Inliners 14 sind hinlänglich bekannt. Der Inliner 14 dient bei dem dargestellten Ausführungsbeispiel auch gleichzeitig zum Sanieren des Abwasserkanalsystems mit seinem Abwasserkanalrohr 1. Somit ist durch das Einziehen des Inliners 14 nicht nur das Abwasserkanalsystem innenseitig saniert, sondern gleichzeitig auch der Absorber 3 fixiert. Des Weiteren wird durch den Inliner 14 die Absorberkanalmatte 4 vor einem direkten Kontakt mit dem in dem Abwasserkanalrohr 1 geführten Abwasser 15 geschützt. Bei einem Einbau des flexiblen Absorbers 3 in der zu Figur 1 beschriebenen Art und Weise in ein Abwasserkanalrohr 1 braucht der Absorber 3 somit nicht notwendigerweise abwasserresistente Eigenschaften aufweisen. Diese Eigenschaften weist der Inliner 14 auf, der die Absorberkanalmatte 4 von dem Abwasser 15 trennt.

Die flexiblen Eigenschaften der Absorberkanalmatte 4, wobei bei dem dargestellten Ausführungsbeispiel die Unterseite der Absorberkanalmatte 4 zusätzlich nachgiebig ist, bedingen ein sattes und vollflächiges Anliegen der Unterseite an der Innenseite des Abwasserkanalrohres 1, ohne dass zusätzliche Bindemittel eingesetzt werden müssen. Mit dem Absorber 3 kann somit Wärme aus dem Abwasser 15 sowie von dem Abwasserkanalrohr 1 aufnehmen. Zwar wird man in aller Regel einen solchen Absorber 3 in den Abwasserkanälen einer Wohnbebauung vorsehen, in denen das Abwasser regelmäßig wärmer sein dürfte als die Temperatur des umgebenden Erdreichs 2 und des Abwasserkanalrohrs 1. Aufgrund seines quasi vollflächigen Kontaktes zu dem Rohr 1 kann der Absorber 3 auch an solchen Kanalstrecken eingesetzt werden, die kühleres Abwasser führen, um sodann Wärme aus dem Erdreich aufzunehmen. Typischerweise sind Abwasserkanalrohre in einer Tiefe von 2 - 3 m im Erdreich verbaut, so dass sich insbesondere in den kühleren Wintermonaten auf diese Weise Erdwärme gewinnen lässt.

Figur 3 zeigt einen Querschnitt einer weiteren Absorberkanalmatte 16, die prinzipiell aufgebaut ist wie die Absorberkanalmatte 4 der Figur 1. Im Unterschied zu der Absorberkanalmatte 4 sind die einzelnen Absorberkanalabschnitte 17 mit einer nach oben gewellten Ausgestaltung konzipiert, wodurch die zum Abwasser weisende Oberfläche der Absorberkanalabschnitte 17 vergrößert ist.

Figur 4 zeigt noch eine weitere Absorberkanalmatte 18, deren Absorberkanalabschnitte 19 quer zur Längserstreckung der Absorberkanalmatte 18 verlaufen. Die Strömungsrichtung des wärmetauschenden Fluids ist in dieser Draufsicht eingezeichnet.

Die beschriebenen Absorberkanalmatten 4, 16, 18 können einstückig durch ein Extrusionsverfahren oder auch zweistückig durch zwei miteinander verbundenen Materiallagen gebildet werden. Im letzteren Fall bilden die die Absorberkanalabschnitte voneinander trennenden Abschnitte die Verbindungsstellen zwischen der oberen und der unteren Materiallage. Gegebenenfalls können Stege eingesetzt sein, um den Abstand der oberen Materiallage von der unteren Materiallage zu erhöhen oder um eine glatte Oberseite und eine glatte Unterseite der Absorberkanalmatte bereitzustellen.

### Bezugszeichenliste

- 1: Abwasserkanalrohr
- 2: Erdreich
- 3: Absorber
- 4: Abwasserkanalmatte
- 5: Abwasserkanalabschnitt
- 6: Übergangslippe
- 7: Vorlauf
- 8: Vorlaufanschluss
- 9: Endstück
- 10: Rücklaufanschluss
- 11: Rücklauf
- 12: Endstück
- 13: Mittelstück
- 14: Inliner (Schlauch)
- 15: Abwasser

- 16: Absorberkanalmatte
- 17: Absorberkanalabschnitt

- 18: Absorberkanalmatte
- 19: Absorberkanalabschnitt

## Patentansprüche

1. Absorber für ein Rohr oder Kanalbauwerk mit wenigstens einem Vorlaufanschluss (8) und wenigstens einem Rücklaufanschluss (10) und einem oder mehreren, einen Vorlauf (7) mit einem Rücklauf (11) verbindenden Absorberkanälen, wobei die Absorberkanäle des Absorbers (3) in einer Absorberkanalmatte (4, 16, 18) zusammengefasst eine gegenständliche Einheit bilden und die Absorberkanalmatte (4, 16, 18) aus einem Material mit zumindest während seiner Verlegung im Rohr oder im Kanalbauwerk flexiblen Eigenschaften besteht, **dadurch gekennzeichnet, dass** ein in das Rohr- oder Kanalbauwerk (1) einziehbare Inliner (14) vorgesehen ist, der aus einem aushärtbaren Material besteht, und der die Absorberkanalmatte (4, 16, 18) im Bereich der Sohle des Rohr- oder Kanalbäuwerks (1) nach dem Aushärten fixiert.

2. Absorber nach Anspruch 1, **dadurch gekennzeichnet, dass** der zumindest eine Absorberkanal einen mäandrierenden Verlauf zwischen seinem Vorlaufanschluss (8) und seinem Rücklaufanschluss (10) aufweist.

3. Absorber nach Anspruch 2, **dadurch gekennzeichnet, dass** die Absorberkanalmatte ein Mittelstück (13) mit parallel zueinander verlaufenden, endseitig offenen Absorberkanalabschnitten (5) und zwei mit dem Mittelstück verbundene Endstücke (9, 12) aufweist, wobei die Endstücke (9, 12) zum Herstellen einer Verbindung von jeweils zwei benachbart zueinander angeordneten, endseitig offenen Absorberkanalabschnitten (5) dienen und einem der beiden Endstücke (9) der Vorlaufanschluss (7) sowie der Rücklaufanschluss (10) zugeordnet ist.

4. Absorber nach einem der Ansprüche 1 bis 3, **dadurch gekennzeichnet, dass** die Absorberkanalabschnitte (5, 17) parallel zur Längserstreckung der Absorberkanalmatte (4, 6) verlaufend angeordnet sind.

5. Absorber nach Anspruch 1 oder 2, **dadurch gekennzeichnet, dass** die Absorberkanalabschnitte (19) quer zur Längserstreckung der Absorberkanalmatte (18) verlaufend angeordnet sind.

6. Absorber nach einem der Ansprüche 1 bis 5, **dadurch gekennzeichnet, dass** der Absorber (3) an seinen Längs und Querseiten in Richtung von dem Absorber (3) wegweisende und sich in dieser Richtung verjüngende Lippen (6) aufweist.

7. Absorber nach einem der Ansprüche 3 bis 6, **dadurch gekennzeichnet, dass** die Oberseite der Absorberkanalmatte (16) im Bereich ihrer Absorberkanalabschnitte (18) zur Vergrößerung der in das Innere des Rohr oder Kanalbauwerks weisenden Oberfläche der einzelnen Absorberkanalabschnitte (18) gewellt ist.

8. Absorber nach einem der Ansprüche 1 bis 7, **dadurch gekennzeichnet, dass** die Absorberkanalmatte (4, 16, 18) zur Ausbildung des oder der Absorberkanäle aus zwei miteinander verbundenen Materiallagen besteht, wobei die Verbindungsbereiche der beiden Materiallagen den Trennung des oder der Absorberkanäle definieren.

9. Absorber nach einem der Ansprüche 1 bis 8, **dadurch gekennzeichnet, dass** das die Unterseite der Absorberkanalmatte (4) bildende Material nachgiebige Materialeigenschaften aufweist.

10. Absorber nach einem der vorhergehenden Ansprüche, **dadurch gekennzeichnet, dass** die Absorberkanalmatte (4, 16, 18) in den Inliner (14) eingewebt oder auf diesen aufkaschiert ist.

## Claims

1. An absorber for a pipe or sewer structure comprising at least one feed connection (8) and at least one return connection (10) and one or more absorber channels that connect a feed (7) to a return (11), the absorber channels of the absorber (3) being combined in an absorber channel mat (4, 16, 18) to form a physical unit, and the absorber channel mat (4, 16, 18) being made of a material having flexible properties at least while it is being laid in the pipe or sewer structure, **characterised in that** an inliner (14) that can be drawn into the pipe or sewer structure (1) is provided that is made of a hardenable material and that secures the absorber channel mat (4, 16, 18) in the bottom region of the pipe or sewer structure (1) after hardening.

2. The absorber according to Claim 1, **characterised in that** the at least one absorber channel has a meandering course between its feed connection (8) and its return connection (10).

3. The absorber according to Claim 2, **characterised in that** the absorber channel mat has a central piece (13) with open absorber channel sections (5) on the end extending parallel to one another and two end pieces (9, 12) connected to the central piece, the end pieces (9, 12) being used to connect respectively two open absorber channel sections (5) on the end side disposed adjacent to one another, and the feed connection (7) and the return connection (10) being assigned to one of the two end pieces (9).

4. The absorber according to any of Claims 1 to 3, **characterised in that** the absorber channel sections (5, 17) are disposed extending parallel to the longitudinal extension of the absorber channel mat (4, 6).

5. The absorber according to Claim 1 or 2, **characterised in that** the absorber channel sections (19) are disposed extending transverse to the longitudinal extension of the absorber channel mat (18).

6. The absorber according to any of Claims 1 to 5, **characterised in that** the absorber (3) has lips (6) on its longitudinal and transverse sides facing away in the direction of the absorber (3) and tapering in this direction.

7. The absorber according to any of Claims 3 to 6, **characterised in that** the upper side of the absorber channel mat (16) is corrugated in the region of its absorber channel sections (18) in order to increase the surface of the individual absorber channel sections (18) facing into the inside of the pipe or sewer structure.

8. The absorber according to any of Claims 1 to 7, **characterised in that** the absorber channel mat (4, 16, 18) for forming the absorber channel or channels is made out of two material layers connected to one another, the connection regions of the two material layers defining the separation of the absorber channel or channels.

9. The absorber according to any of Claims 1 to 8, **characterised in that** the material forming the lower side of the absorber channel mat (4) has resilient material properties.

10. The absorber according to any of the preceding claims, **characterised in that** the absorber channel mat (4, 16, 18) is woven into the inliner (14) or laminated onto the latter.

## Revendications

1. Absorbeur pour structure de tuyaux ou de canaux avec au moins un raccordement de départ (8) et au moins un raccordement de retour (10) et un ou plusieurs canaux absorbeurs reliant un départ (7) avec un retour (11), les canaux absorbeurs de l'absorbeur (3) forment une unité matérielle regroupée dans une natte de canaux absorbeurs (4, 16, 18) et la natte de canaux absorbeurs (4, 16, 18) étant constituée d'un matériau avec au moins des propriétés de flexibilité pendant son déplacement dans la structure de tuyaux ou de canaux (1), **caractérisé en ce qu'**un tube intérieur rétractable (14) est prévu, qui est constitué d'un matériau durcissant et qui fixe la natte de canaux absorbeurs (4, 16, 18) dans la zone du fond de la structure de tuyaux et de canaux (1) après le durcissement.

2. Absorbeur selon la revendication 1, **caractérisé en ce qu'**au moins un canal absorbeur présente un tracé sinueux entre son raccordement de départ (8) et son raccordement de retour (10).

3. Absorbeur selon la revendication 2, **caractérisé en ce que** la natte de canaux absorbeurs présente une partie centrale (13) avec des sections de canaux absorbeurs (5) parallèles les unes aux autres et aux extrémités arrières ouvertes , et deux embouts (9, 12) reliés à la partie centrale, les embouts (9, 12) servant à fabriquer un raccord de respectivement deux sections de canaux absorbeurs (5) disposées de façon adjacente entre elles et aux embouts ouverts, et affecté à un des deux embouts (9)du raccordement de départ (7) et du raccordement de retour (10).

4. Absorbeur selon l'une des revendications 1 à 3, **caractérisé en ce que** les sections de canaux absorbeurs (5, 17) sont disposées parallèlement à la mesure longitudinale de la natte de canaux absorbeurs (4, 6).

5. Absorbeur selon la revendication 1 ou 2, **caractérisé en ce que** la section du canal absorbeur (19) soit disposée en travers de la mesure longitudinale de la natte du canal absorbeur (18).

6. Absorbeur selon l'une des revendications 1 à 5, **caractérisé en ce que** l'absorbeur (3) présente sur ses côtés longitudinal et transversal en direction de l'absorbeur (3) innovateur et se présente en direction des lèvres coniques (6).

7. Absorbeur selon l'une des revendications 3 à 6, **caractérisé en ce que** la partie supérieure de la natte de canaux absorbeurs (16) est ondulé dans la zone de sa section de canaux absorbeurs (18) pour augmenter la surface présente de chaque section de canaux absorbeurs (18) à l'intérieur de la construction de tuyau ou de canaux.

8. Absorbeur selon l'une des revendications 1 à 7, **caractérisé en ce que** la natte de canaux absorbeurs (4, 16, 18) consiste en la formation du ou des canaux absorbeurs à partir de deux couches de matériau interconnectées, les zones de connexion des deux couches de matériau définissant la séparation du ou des canaux absorbeurs.

9. Absorbeur selon l'une des revendications 1 à 8, **caractérisé en ce que** la partie inférieure de la natte de canaux absorbeurs (4) présente le matériau formant les propriétés des matériaux souples.

10. Absorbeur selon l'une des revendications précédentes, **caractérisé en ce que** la natte de canaux absorbeurs (4, 16, 18) est tissée dans le tube intérieur (14) ou est cémenté sur celui-ci.
